(19) **Europäisches Patentamt / European Patent Office / Office européen des brevets**

(11) **EP 2 132 703 B1**

(12) **FASCICULE DE BREVET EUROPEEN**

(45) Date de publication et mention
de la délivrance du brevet:
**14.07.2010 Bulletin 2010/28**

(21) Numéro de dépôt: **08718199.6**

(22) Date de dépôt: **26.03.2008**

(51) Int Cl.:
**G06T 5/00** (2006.01)     **G06T 5/50** (2006.01)
**H04N 5/235** (2006.01)

(86) Numéro de dépôt international:
**PCT/EP2008/053516**

(87) Numéro de publication internationale:
**WO 2008/125435 (23.10.2008 Gazette 2008/43)**

(54) **PROCEDE DE CORRECTION DE BRUIT SPATIAL D'UN CAPTEUR D'IMAGE MATRICIEL**

VERFAHREN ZUM KORRIGIEREN DES SPACE-RAUSCHENS EINES BILDSENSORS

METHOD FOR CORRECTING THE SPACE NOISE OF AN IMAGE SENSOR

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **30.03.2007 FR 0702351**

(43) Date de publication de la demande:
**16.12.2009 Bulletin 2009/51**

(73) Titulaire: **Commissariat à l'Énergie Atomique et aux Énergies Alternatives
75015 Paris (FR)**

(72) Inventeur: **CHAMMING'S, Gilles
F-38100 Grenoble (FR)**

(74) Mandataire: **Guérin, Michel
Marks & Clerk France
Conseils en Propriété Industrielle
Immeuble " Visium "
22, avenue Aristide Briand
94117 Arcueil Cedex (FR)**

(56) Documents cités:
**EP-A- 0 751 483          US-A- 6 151 417
US-A1- 2007 047 834**

## Description

L'invention concerne les capteurs d'image matriciels, et elle concerne plus particulièrement une méthode pour corriger le bruit spatial engendré par la dispersion des propriétés physiques des différents points sensibles élémentaires, ou pixels, de la matrice. Ce bruit spatial est particulièrement important dans le cas de capteurs d'image infrarouges, que ce soient des capteurs à éléments photovoltaïques, qui mesurent des courants engendrés par le rayonnement infrarouge, ou des capteurs à éléments bolométriques, qui mesurent une température résultant d'un échauffement produit par le rayonnement.

Le bruit spatial engendre une image parasite qui détériore l'image utile ou même la rend inexploitable : en supposant que la scène observée par le capteur est une image de luminance uniformément moyenne, le capteur fournit une image non-uniforme, ce qui est inacceptable si cette non-uniformité excède un certain degré ; de plus, l'image observée dépend du niveau de cette luminance uniforme, ce qui rend ce bruit encore plus gênant puisque la différence de comportement de deux pixels dépend de la luminance qu'ils reçoivent.

Le comportement des pixels diffère en effet d'un pixel à l'autre non seulement en ce qui concerne le niveau de signal produit pour un niveau de luminance de référence, mais aussi en ce qui concerne la pente de croissance et l'allure générale (pour simplifier : la courbure) de la courbe de réponse du pixel en fonction de la luminance.

Pour réduire au minimum le bruit spatial ainsi engendré dans un capteur matriciel, on a déjà proposé de relever les niveaux de signaux de sortie des différents pixels pour une image uniforme de luminance donnée et de décaler individuellement le niveau de signal de chaque pixel pour que tous les pixels soient ramenés à une même référence (correction au premier ordre). On a également proposé de relever les niveaux pour deux niveaux de luminance uniforme, afin de corriger non seulement le décalage de niveau mais aussi la pente de variation (correction au deuxième ordre).

Ces méthodes nécessitent un calibrage manuel à partir d'une ou deux images uniformes présentant des luminances de référence, ce qui est gênant ; par ailleurs, ce calibrage doit être refait si le bruit spatial dérive au cours du temps.

US 2007047834 divulgue la correction de bruit pour chaque pixel par modification des luminaces selon une moyenne glissante à partir d'une séquence d'images et à l'aide des filtres de Kalman dans des régions sans mouvement d'objet.

Enfin, il a été proposé d'effectuer des calculs correctifs de chacun des points de l'image recueillie, à partir de l'observation d'un grand nombre d'images successives, en faisant l'hypothèse que la moyenne statistique et la variance statistique des niveaux de lumière reçus par un pixel est la même pour tous les pixels en raison de la diversité des images reçues au cours du temps. Ainsi, on calcule la moyenne des signaux reçus dans le temps pour chaque pixel et on effectue une correction du signal courant du pixel pour décaler le niveau courant d'une valeur correspondant à l'écart entre la moyenne détectée pour ce pixel et une valeur de référence de moyenne commune à tous les pixels. Ceci ramène le niveau moyen de tous les signaux à la même valeur de référence.

De même on calcule la variance pour chaque pixel sur un grand nombre d'images, cette variance représentant en quelque sorte une approximation de la pente de la courbe de variation du niveau de signal en fonction de la luminance, et on applique une correction de gain aux variations de signal courant, la correction étant l'écart entre la variance calculée et une variance de référence commune à tous les pixels. Ceci ramène la pente de variation de chaque pixel à une même valeur de référence.

Cette solution est très intéressante puisqu'elle ne nécessite aucun calibrage à partir de mires.

Mais ces calculs sont très lourds puisqu'ils nécessitent de recueillir un grand nombre d'images, de les stocker toutes, de faire des calculs de moyenne pour chaque pixel sur ce grand nombre d'images, ainsi que des calculs de variance sur chaque pixel. En pratique, cela ne peut être effectué que par un calculateur puissant, sur des séries d'images préenregistrées. On ne pourrait pas recueillir et traiter directement l'image dans la caméra de prise de vue. Par conséquent, bien que cette solution soit utilisable en théorie pour le traitement d'images en différé, elle n'est pas du tout applicable pour une prise d'image instantanée.

L'invention propose une solution pour pallier cette difficulté.

Selon l'invention, on propose un procédé de calibrage automatique de la réponse des différents pixels d'un capteur matriciel pour éliminer le bruit spatial dû à la réponse non uniforme des différents pixels. Le procédé selon l'invention est un procédé de traitement de signaux issus des pixels d'un capteur d'image matriciel, **caractérisé en ce qu'**il comprend les étapes suivantes :

- on recueille le signal issu de chaque pixel au cours d'un grand nombre d'images successives ;
- on détermine pour chaque pixel, dans un circuit électronique élémentaire associé au pixel, par une méthode numérique récursive, une valeur approchée d'une moyenne du signal issu du pixel au cours de ce grand nombre d'images ;
- on corrige instantanément le signal issu de chaque pixel en fonction de la valeur moyenne approchée déterminée et en fonction d'une valeur moyenne de référence commune à tous les pixels,

- on transmet hors du circuit associé au pixel un signal corrigé.

Par méthode numérique récursive, on entend une méthode de calcul d'une fonction $F_N(x_1, x_2, x_3, ...x_n.....x_N)$ de N variables $x_n$ de rang n variant de 1 à N, dans laquelle on part d'une valeur $F_n$ trouvée pour cette fonction en utilisant les n premières variables et on calcule la valeur $F_{n+1}$ pour n+1 variables par une fonction de $F_n$ et de la variable ajoutée $x_{n+1}$ :

$$F_{n+1} = R(F_n, x_{n+1}).$$

Une telle méthode aboutit progressivement au calcul de $F_N$ et n'est pas limitée par la valeur de N puisqu'elle peut continuer au fur et à mesure que N augmente.
La moyenne approchée est obtenue de préférence en additionnant à une moyenne précédemment obtenue une fraction de l'écart entre la valeur du signal courant correspondant à une image et la moyenne précédemment obtenue à partir des images précédentes.
Le signal corrigé peut être ensuite obtenu en additionnant au signal courant la différence entre la moyenne de référence et la moyenne calculée.
On peut également calculer la moyenne approchée d'une manière indirecte, mais toujours récursive, à partir du signal préalablement corrigé par une estimation de cette moyenne. On détermine de manière récursive la moyenne rapportée à la valeur de référence, c'est-à-dire qu'on évalue la différence entre la moyenne et la moyenne de référence. Pour cela, on calcule une estimation d'écart de moyenne et on ajoute cette estimation au signal courant pour obtenir un signal corrigé, le calcul récursif de l'estimation étant effectué en additionnant à une estimation précédemment calculée une fraction de la différence entre la valeur moyenne de référence et le signal corrigé.
Le signal issu du pixel est alors corrigé en lui ajoutant la différence calculée récursivement.
Une autre manière de calculer une moyenne approchée consiste à détecter les valeurs limites haute et basse prises par le signal issu du pixel au cours du grand nombre d'images, à déterminer une valeur centrale entre ces valeurs limites hautes et basses, et à corriger le signal issu du pixel en lui ajoutant la différence entre la valeur moyenne approchée ainsi calculée et la valeur de référence.
Dans ce cas, la valeur limite haute peut être obtenue de manière récursive par l'algorithme suivant :

- si la valeur du signal du pixel pour l'image courant est supérieure à la valeur limite haute, on modifie la valeur limite haute pour lui ajouter une fraction de la différence entre la valeur du signal et la valeur limite ;
- si la valeur du signal du pixel est inférieure à la valeur limite, on retranche à cette valeur une fraction de la différence entre les valeur limites haute et basse.

Pour la valeur limite basse, on agirait symétriquement.
En plus des corrections additives qui viennent d'être mentionnées, on peut aussi prévoir au niveau du pixel une correction multiplicative utilisant un coefficient multiplicateur qui modifie la pente de variation du signal en fonction de la luminance ; le coefficient multiplicateur est le rapport entre un écart de référence et l'écart constaté entre les valeurs limites haute et basse.
Outre le procédé de correction qui vient d'être résumé, l'invention concerne un capteur d'image matriciel, comprenant, pour chaque pixel, un circuit numérique élémentaire associé au pixel, ce circuit élémentaire comportant des moyens pour calculer de manière récursive une valeur approchée d'une moyenne du signal issu du pixel au cours d'un grand nombre d'images précédentes, des moyens pour corriger le signal issu du pixel en fonction de la valeur moyenne approchée déterminée et en fonction d'une valeur moyenne de référence commune à tous les pixels, et des moyens pour transmettre hors du circuit associé au pixel un signal corrigé.
Le circuit élémentaire associé et un photodétecteur élémentaire fournissant le signal à corriger pour ce pixel peuvent être placés dans une même zone au sein d'une matrice de pixels.
Mais on peut prévoir aussi que le capteur d'image est organisé en deux matrices distinctes, l'une des matrices étant réservée à la prise d'image (matrice de photodétecteurs élémentaires) et l'autre à la correction de signal (matrice de circuits de correction élémentaires associés chacun à un pixel).
D'autres caractéristiques et avantages de l'invention apparaîtront à la lecture de la description détaillée qui suit et qui est faite en référence aux dessins annexés dans lesquels :

- la figure 1 représente le circuit numérique de calcul récursif d'une valeur moyenne approchée ;
- la figure 2 représente une variante de circuit dans laquelle le calcul récursif est fait à partir des signaux corrigés par une estimation de l'écart de moyennes ;

- la figure 3 représente une partie de circuit supplémentaire pour l'application d'une correction multiplicative.

L'invention part du postulat que la distribution temporelle statistique des luminances est bien la même pour tous les pixels de l'image. En particulier le niveau de luminance moyen qui aura été vu par les pixels de la matrice sera le même pour tous les pixels ; également, les niveaux de luminance extrêmes (minimum et maximum) ont de bonnes chances d'être les mêmes.

Si le postulat de départ sur lequel se fonde l'invention est vérifié on pourra corriger de manière extrêmement satisfaisante chacun des pixels en calculant leur moyenne et en corrigeant chaque signal par l'écart entre la moyenne trouvée et une valeur de référence commune à tous les pixels. Si ce postulat n'est qu'approximativement vérifié, par exemple parce qu'on n'a pas calculé la moyenne sur des nombres d'images suffisamment grands, on aura de toutes façons considérablement amélioré le bruit spatial sans faire appel à une calibration manuelle et sans utiliser de scènes de calibrage ayant des luminances de référence.

Le calcul de moyenne pixel par pixel pour un grand nombre d'images est très lourd. L'invention propose de faire au niveau de chaque pixel d'image un calcul simplifié et approché, qui n'est donc pas un véritable calcul de moyenne, mais qui fournit un résultat presque équivalent du point de vue du but recherché ; avec ce calcul approché, on effectue une correction au niveau du pixel de manière à extraire directement et instantanément un signal corrigé.

Le calcul et la correction au niveau du pixel peuvent se faire soit dans la matrice de détection elle-même si la technologie le permet (le circuit électronique de calcul associé à un pixel étant à proximité immédiate d'un élément photodétecteur du pixel) ou dans une matrice de circuits associés reliée pixel à pixel à une matrice d'éléments photodétecteurs. Dans ce deuxième cas, un circuit de calcul associé, de rang i,j dans la matrice de circuits, reçoit un signal à corriger d'un élément photodétecteur de rang i,j de la matrice de détection et il fournit vers l'extérieur du capteur un signal corrigé ; les techniques d'hybridage de circuits permettent cette association. Dans les deux cas, le signal issu du photodétecteur est corrigé avant la transmission vers l'extérieur, ligne par ligne, d'une série de signaux correspondant à une image complète.

## Correction additive par la moyenne temporelle des signaux d'un pixel

On va d'abord expliciter l'invention dans un exemple simple où la correction de bruit spatial ne comporte qu'une correction de niveau de référence de signal, pour corriger le signal de chacun des pixels de telle sorte que tous les pixels fournissent un même niveau de signal (après correction) pour un niveau de luminance moyen. Il s'agit d'une correction additive : pour corriger le signal reçu par un pixel, on ajoute ou on retranche systématiquement une valeur de correction.

On appelle $S_{ij,n}$ le niveau de signal issu d'un pixel $P_{ij}$ de rang i en ligne et j en colonne, lors d'une $n^{ième}$ image d'une série d'images successives.

On calcule une moyenne (approchée) $M_{ij}$ des niveaux de signal fournis par le pixel $P_{ij}$ pour une série de N images et on s'en sert pour corriger la valeur du signal $S_{ij,n}$ et fournir à l'utilisateur une valeur corrigée $S^*_{ij,n}$.

A chaque nouvelle image on recalcule une moyenne $M_{ij}$, et c'est cette moyenne qui va servir à corriger le signal issu d'un pixel pour cette image ou pour la suivante.

La correction appliquée au signal $S_{ij,n}$ est une soustraction de l'écart entre la moyenne $M_{ij}$ et une valeur de référence M0 commune à tous les pixels. La correction est donc la suivante : $S^*_{ij,n} = S_{ij,n} + M0 - M_{ij}$.

Par conséquent, si un pixel fournit statistiquement un signal dont la valeur moyenne $M_{ij}$ n'est pas égale à la valeur moyenne statistique M0 des signaux fournis par tous les autres pixels, on considère que ce pixel a cependant reçu statistiquement la même luminance moyenne que tous les autres et c'est donc du fait d'une sensibilité différente qu'il fournit un signal différent. On le corrige systématiquement en lui soustrayant l'écart $M_{ij}-M0$.

## Calcul récursif pour obtenir une moyenne $M_{ij}$

Il n'est pas facile de calculer une moyenne $M_{ij}$ sur un très grand nombre d'échantillons puisqu'il faut faire la somme de N échantillons et diviser cette somme par N ; à chaque nouvelle image il faut éliminer un échantillon le plus ancien et le remplacer par le nouvel échantillon (ce qui donne une moyenne glissante sur les derniers N échantillons reçus) ; ce calcul est d'autant plus lourd que N est plus élevé ; cependant, on a besoin que N soit élevé pour que l'invention fonctionne bien.

Pour obtenir instantanément une très bonne approximation de la moyenne quelle que soit la valeur de N, on procède de manière récursive : à partir d'une moyenne $M_{ij,n-1}$ précédemment calculée alors que n-1 images ont été reçues dans la série, on calcule une nouvelle moyenne $M_{ij,n}$ à partir du signal $S_{ij,n}$ reçu avec la $n^{ième}$ image on ajoutant à l'ancienne moyenne une fraction seulement de l'écart entre le signal $S_{ij,n}$ et la moyenne $M_{ij,n-1}$.

$$M_{ij,n} = M_{ij,n-1} + (S_{ij,n} - M_{ij,n-1})/A$$

La moyenne $M_{ij}$ servant à la correction du signal $S_{ij,n}$ est la dernière moyenne stockée $M_{ij,n}$, mais elle pourrait aussi être la moyenne précédente $M_{ij,n-1}$.

A est un nombre quelconque qui représente en quelque sorte le nombre d'échantillons sur lequel porte la moyenne. En effet, plus le nombre A est grand plus la moyenne récursive peut être considérée comme portant sur un grand nombre d'échantillons ; la raison en est la suivante : si A est grand la réception d'un signal très différent de la moyenne ne se répercute que peu sur la moyenne, exactement comme cela se passe quand la moyenne porte sur un très grand nombre d'échantillons. Inversement, si A est petit, un échantillon différent de la moyenne a une répercussion forte sur la moyenne, exactement comme si la moyenne portait sur un faible nombre d'échantillons.

Il est donc très avantageux, pour mettre en oeuvre l'invention, d'utiliser un nombre A élevé puisqu'on approche d'autant mieux une moyenne sur un grand nombre ; le seul inconvénient est qu'au démarrage la moyenne s'établit lentement. Toutes les images antérieurement prises par la caméra serviront donc à la correction de bruit spatial et chaque nouvelle image n'aura qu'un impact faible sur la valeur moyenne. Les signaux recueillis dans le passé ont un impact qui décroît dans le temps selon une loi de pondération exponentielle décroissante à partir de la mesure la plus récente et tendant vers zéro pour les mesures les plus anciennes.

On comprend que la moyenne récursive $M_{ij}$ ainsi calculée n'est pas une véritable moyenne, mais elle est le résultat d'une sorte de filtrage passe-bas numérique dont le résultat représente l'équivalent d'une moyenne, jouant le même rôle qu'une moyenne pour les besoins de la correction de bruit spatial.

Le nombre A peut être une puissance de 2 car il est particulièrement facile, dans un circuit électronique de calcul numérique, de diviser le signal par une puissance de 2, sachant qu'une division par une puissance de 2 consiste en un simple décalage du rang des bits.

Typiquement, le nombre A peut être de l'ordre de $2^8$ à $2^{14}$. Si c'est $2^{12}$, et si la cadence d'image est de 50 images par seconde, la constante de temps d'établissement de la moyenne est d'un peu plus d'une minute.

Dans la réalisation pratique du calcul récursif, on comprend que les registres de calcul récursif doivent, du fait de la division par le nombre $A=2^p$, comporter un nombre de bits suffisant pour pouvoir calculer précisément la somme $S_{ij,n} + (S_{ij,n} - M_{ij,n-1})/2^p$, mais que la correction du signal du pixel $S^*_{ij,n} = S_{ij,n} + (M_{ij}-M0)$ n'utilisera que les poids forts du registre qui contient la valeur moyenne. Autrement dit, si le signal issu du pixel est codé sur 13 bits par exemple, la moyenne sera également codée sur 13 bits pour servir à la correction, mais le calcul de cette moyenne se fera par un registre ayant un plus grand nombre de bits (d'autant plus que A est grand), faute de quoi le calcul récursif serait très imprécis.

<u>Mise en oeuvre du calcul récursif de la moyenne $M_{ij}$</u>

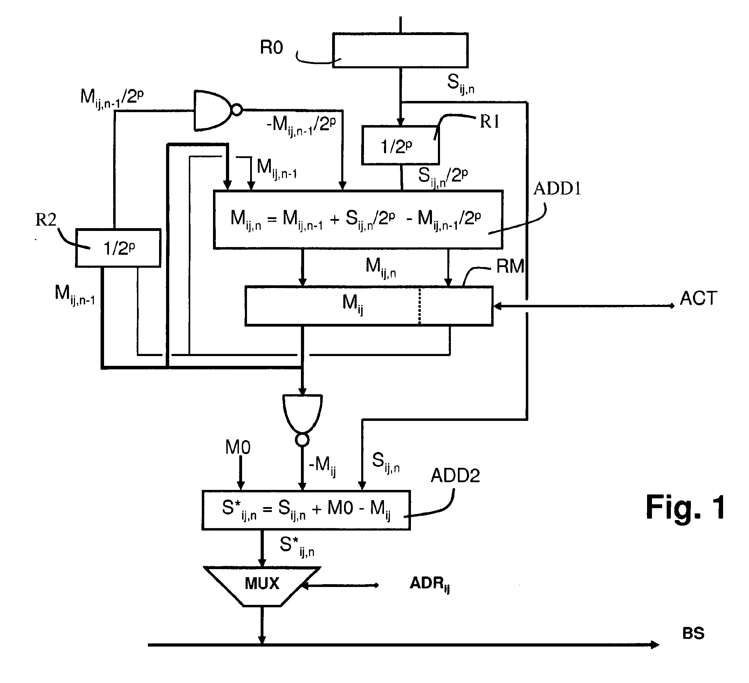

La figure 1 représente un circuit élémentaire, associé à un seul pixel $P_{ij}$ de la matrice de prise d'image, capable de corriger le signal issu de ce pixel à partir de la moyenne approchée des signaux issus de ce pixel sur un grand nombre d'images. Le circuit effectue le calcul numérique récursif indiqué ci-dessus. Il y a autant de circuits que de pixels.

Le signal numérisé $S_{ij,n}$ issu du pixel $P_{ij}$ et correspondant à la $n^{ième}$ image est contenu dans un registre d'entrée R0. Le signal corrigé $S^*_{ij,n}$ sort par un bus de sortie BS.

La valeur du signal $S_{ij,n}$ est divisée par $2^p$, par exemple en appliquant la sortie du registre R0 à un registre R1 dont la fonction est de décaler les bits de sortie du registre R0 de p positions vers la droite, ce qui équivaut à une division par $2^p$. Le nombre p est tel que $A = 2^p$, A étant la quantité utilisée pour le calcul récursif précédemment décrit.

La sortie du registre R1 est appliquée à une première entrée d'un additionneur ADD1. De ce décalage de p bits il résulte que le bit de poids le plus faible appliqué par cette entrée à l'additionneur est le bit de rang p+1 du signal $S_{ij,n}$. L'additionneur reçoit une valeur $S_{ij,n}/2^p$ sur cette entrée.

L'additionneur ADD1 reçoit par ailleurs la valeur $M_{ij,n-1}$ actuellement présente dans un registre RM de valeur moyenne, et il reçoit également cette même valeur divisée par $2^p$. L'additionneur ADD1 effectue l'addition $M_{ij,n} = M_{ij,n-1} + (S_{ij,n}-M_{ij,n-1})/2^p$ conformément à ce qui a été expliqué précédemment. En d'autres mots, il actualise la moyenne $M_{ij}$ en lui ajoutant la différence, divisée par $2^p$, entre le signal courant et la valeur moyenne précédente.

Pour obtenir la valeur $M_{ij,n-1}/2^p$, on peut placer à la sortie du registre RM un registre R2, analogue au registre R1 ; le registre R2 stocke un contenu issu de RM mais décalé de p bits vers la droite ; il en résulte que c'est le bit de rang p+1 de la moyenne $M_{ij,n-1}$ qui devient le bit de poids faible qui sera appliqué à l'additionneur. Là encore, cela revient à diviser $M_{ij,n-1}$ par $2^p$.

En sortie du registre R2, on peut placer un inverseur numérique qui, à partir de la valeur $M_{ij,n-1}/2^p$, produit la valeur opposée $-M_{ij,n-1}/2^p$. L'inversion numérique est faite à partir du complément à 1, très facile à réaliser.

Le détail de l'additionneur ADD1 n'est pas représenté ; comme on additionne trois valeurs, il faut en principe deux additionneurs élémentaires en cascade.

Le registre de valeur moyenne RM est réactualisé à chaque nouvelle image pour prendre la nouvelle valeur $M_{ij,n}$. Il comporte donc une entrée d'actualisation ACT. L'actualisation a lieu par exemple à la fin d'une durée d'exposition d'image, pour tous les pixels à la fois. Après actualisation, le registre de valeur moyenne RM contient une valeur moyenne $M_{ij}$ qui peut être utilisée pour corriger le signal $S_{ij,n}$

La correction est faite dans un deuxième additionneur ADD2 qui reçoit le signal non corrigé $S_{ij,n}$, la sortie du registre RM, et la valeur de consigne de moyenne M0 commune à tous les pixels, et qui effectue l'addition

$$S^\star_{ij,n} = S_{ij,n} + M0 - M_{ij,n}$$

L'additionneur ADD2 effectue donc une addition et une soustraction. Là encore, la soustraction consiste classiquement à additionner le complément à deux de la valeur à soustraire. Un inverseur a été représenté entre le registre RM et l'additionneur pour indiquer qu'il faut ajouter l'opposé de la moyenne $M_{ij}$.

Le résultat de l'addition, c'est-à-dire le signal corrigé $S^\star_{ij,n}$ est fourni par l'additionneur ADD2, à travers un multiplexeur MUX commandé par un bus d'adressage. Le signal corrigé est émis seulement si l'adresse $ADR_{ij}$ du pixel $P_{ij}$ arrive par le bus d'adressage. Le multiplexeur assure la mise en série sur le bus de sortie BS des signaux successifs correspondant à chaque pixel.

On notera que cette méthode récursive de calcul de moyenne nécessite que l'additionneur ADD1 et le registre RM puissent additionner des valeurs avec une résolution binaire supérieure à celle du signal et de la moyenne utilisée en fin de calcul pour la correction du signal courant. En effet, pour calculer $M_{ij}$, on doit ajouter à une valeur courante de $M_{ij}$ une petite valeur qui est $(S_{ij}M_{ij})/2^p$ et le calcul récursif n'aurait pas de sens si cette petite valeur n'était pas calculée avec une précision supérieure à la précision du signal.

C'est pourquoi on a représenté la sortie du registre RM sous forme d'un bus de poids forts et d'un bus de poids faible, et les deux bus sont appliqués à l'entrée de l'additionneur ADD1. Mais seul le bus de poids fort est appliqué au deuxième additionneur ADD2, ce dernier recevant des entrées ayant la résolution du signal reçu mais pas une résolution supérieure.

Mise en oeuvre avec calcul de moyenne de signaux corrigés $S^\star_{ij,n}$

Plutôt que de calculer la moyenne $M_{ij}$ des signaux issus des pixels, pour la comparer à la moyenne commune M0 désirée et corriger les signaux pour que les signaux corrigés aient une moyenne aussi proche que possible de M0, on peut aussi analyser la moyenne des signaux corrigés, qui devrait être égale à M0 pour tous les pixels, et calculer une correction dans un sens tel que cette moyenne ne s'écarte pas de M0. Dans un processus de calcul récursif de moyenne, il peut être plus simple d'établir cette différence indirectement à partir des signaux corrigés plutôt qu'à partir des signaux reçus ; dans ce cas le calcul récursif est fait en stockant dans un registre l'estimation d'écart de moyennes et en corrigeant progressivement cet écart dans un sens tendant à rapprocher de M0 la moyenne des signaux corrigés. Ceci est fait en retranchant à l'estimation d'écart stockée dans le registre une petite fraction de la différence entre la valeur du signal corrigé et la moyenne M0.

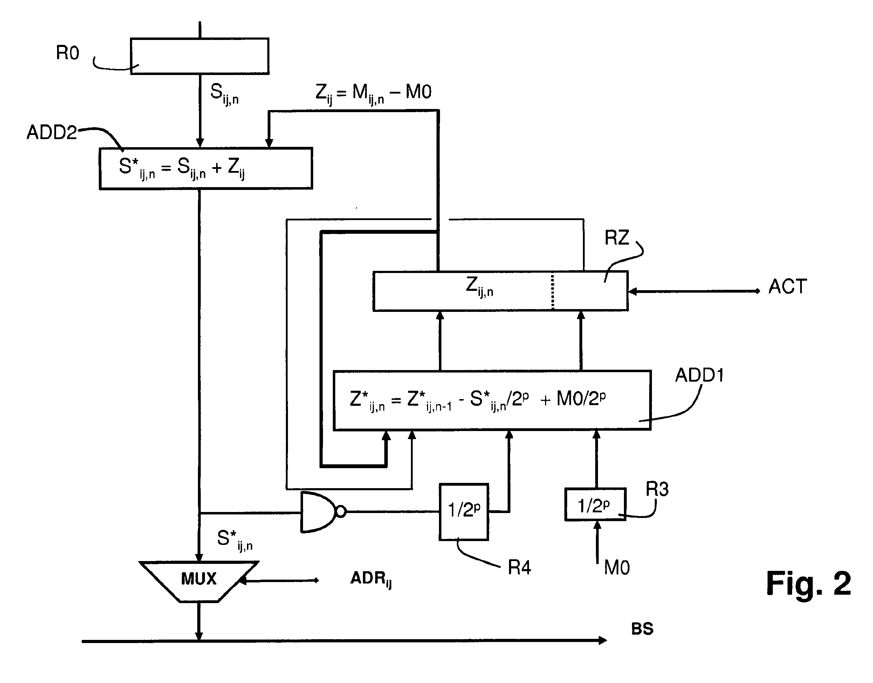

C'est ce qui est fait dans la réalisation de la figure 2. Le circuit représenté est celui qui est associé au pixel $P_{ij}$ et il y autant de circuits semblables à celui-ci qu'il y a de pixels.

Comme à la figure 1, les signaux $S_{ij,n}$ issus des pixels arrivent par un registre d'entrée R0 et les signaux corrigés $S^\star_{ij,n}$ sont émis à travers un multiplexeur MUX vers un bus de sortie BS. Le multiplexeur est commandé par un bus d'adressage pour n'émettre le signal $S^\star_{ij,n}$ correspondant au pixel $P_{ij}$ que si l'adresse $ADR_{ij}$ de ce pixel est appliquée au multiplexeur.

Un registre RZ, de résolution plus fine que la résolution binaire des signaux $S_{ij,n}$ est utilisé pour établir et stocker à chaque nouvelle image une estimation $Z_{ij}$ d'écart de moyennes. Si on fait le parallèle avec la réalisation de la figure 1, cette valeur $Z_{ij}$ représente la correction qu'il faut apporter au signal $S_{ij,n}$ pour que sa moyenne passe de sa valeur réelle $M_{ij}$ à la valeur de référence M0.

Plus précisément, l'opération récursive sur $Z_{ij}$ consiste à obtenir une nouvelle estimation $Z_{ij,n}$ à la $n^{ième}$ image en retranchant à l'estimation précédente $Z_{ij,n-1}$ une petite fraction 1/A de la différence entre le signal corrigé et la valeur désirée M0 pour la moyenne des signaux corrigés $S^\star_{ij}$.

Ainsi, l'équation récursive est la suivante, avec $A = 1/2^p$ :

$$Z_{ij,n} = Z_{ij,n-1} + M0/2^p - S^\star_{ij,n}/2^p$$

Cette estimation d'écart tend progressivement vers M0 - $M_{ij}$ et s'y stabilise, avec une constante de temps de filtrage d'autant plus longue que p est plus grand.

La correction du signal $S_{ij}$ consiste alors à rajouter au signal la valeur $Z_{ij}$ représentant l'écart entre la moyenne des signaux non corrigés et la moyenne désirée des signaux corrigés.

Le schéma de la figure 2 comprend donc un additionneur ADD1 pour établir le calcul récursif et un additionneur ADD2 pour établir le signal corrigé.

L'additionneur ADD2 reçoit d'une part le signal $S_{ij,n}$ issu du registre R0 et d'autre part la sortie du registre RZ (uniquement les sorties de poids fort correspondant à la même résolution que le signal $S_{ij}$, pas les sorties de poids faible utilisées uniquement pour effectuer l'addition récursive).

L'additionneur ADD1 reçoit trois entrées :

- la sortie du registre RZ (poids forts et poids faibles)
- la sortie d'un registre R3 contenant la valeur $M0/2^p$, c'est-à-dire contenant la valeur M0 mais décalée vers la droite de p bits avant d'être appliquée au registre
- et la sortie d'un registre R4 contenant la valeur $-S^*_{ij,n}/2^p$, c'est-à-dire l'opposé du signal corrigé $S^*_{ij,n}$ mais décalé vers la droite de p bits.

On a représenté symboliquement un inverseur entre le signal $S^*_{ij,n}$ sortant de l'additionneur ADD2 et le registre R4, pour effectuer l'opération de calcul de l'opposé $-S^*_{ij,n}$ du signal $S^*_{ij,n}$.

Comme à la figure 1, le registre RZ est commandé par un signal d'actualisation ACT, activé par exemple à la fin d'une durée d'exposition, pour tous les pixels à la fois.

Correction additive par une valeur médiane entre extrêmes

Une autre manière de calculer une correction du signal issu du pixel consiste à comparer à une valeur théorique de consigne M0 commune à tous les pixels la moyenne entre deux valeurs extrêmes de luminance reçues par un pixel au cours des N images successives.

On considère donc que le niveau moyen de signal qu'un pixel fournit, et qui représente un niveau de luminance moyenne, est la demi-somme entre le signal le plus faible reçu par un pixel et le signal le plus fort reçu par ce pixel. Et, selon l'invention, on considère que tous les pixels devraient recevoir au moins une fois un niveau de luminance très faible qui est le même pour tous les pixels et un niveau de luminance très fort qui est le même pour tous les pixels ; et on considère d'autre part que la demi-somme de ces luminances représente un niveau de luminance moyen qui devrait être le même pour tous les pixels.

La correction proposée, approximative mais intéressante, consiste alors à considérer que la demi-somme du niveau de signal le plus faible $S_{ij}min$ et du niveau de signal le plus fort $S_{ij}max$ fourni par un pixel devrait être une valeur de référence M0 identique pour tous les pixels. Si ce n'est pas le cas on fait une correction additive pour soustraire du signal reçu la différence entre la demi-somme constatée et la valeur de référence M0.

Le signal corrigé est alors

$$S^*_{ij,n} = S_{ij,n} + M0 - (S_{ij}min + S_{ij}max)/2$$

Les valeurs minimale et maximale sont obtenues par un calcul récursif pour que ce calcul puisse être effectué dans un petit circuit associé à chaque pixel.

L'évaluation des valeurs minimale et maximale du signal reçu par un pixel, peut se faire simplement en comparant la valeur du signal reçu à celle d'un registre de valeur minimale et d'un registre de valeur maximale. Le contenu du registre de valeur minimale est remplacé par la valeur du signal si celle-ci est plus faible que le contenu du registre ; sinon le registre reste inchangé. Le contenu du registre de valeur maximale est remplacé par la valeur du signal si celle-ci est plus forte que le contenu du registre ; sinon le registre reste inchangé.

Cependant, comme on l'indique ci-dessous, il peut être préférable de faire un calcul récursif plus sophistiqué qui minimise l'impact de points aberrants sur la valeur minimale ou maximale détectée. D'autre part il peut être souhaitable de prévoir que les valeurs extrêmes stockées, pour chaque pixel, tendent naturellement à être progressivement ramenées l'une vers l'autre, pour tenir compte de ces points aberrants et pour tenir compte de dérives progressives, de variations de température, etc.

Le calcul qui suit montre comment on peut calculer récursivement et stocker des valeurs extrêmes corrigées, à la place des valeurs extrêmes véritables, pour tenir compte de cela.

**EP 2 132 703 B1**

<u>Calcul récursif de valeurs extrêmes corrigées</u>

Le calcul sera montré à propos de la valeur maximale du signal reçu par le pixel. Un calcul identique pourrait être fait pour la valeur minimale.

On appelle $S_{ij}maxc$ la valeur extrême corrigée, stockée dans un registre et utilisée pour la correction du signal courant en lieu et place de la véritable valeur extrême $S_{ij}max$ qui a pu être détectée. De même, $S_{ij}minc$ est la valeur extrême minimale corrigée, stockée dans un autre registre.

Si le signal courant $S_{ij,n}$ d'une image est supérieur à la valeur stockée, on modifie la valeur stockée pour lui ajouter une fraction 1/B de la différence entre la valeur courante et la valeur stockée, et non pas la totalité de cette différence comme on le ferait si on voulait stocker la véritable valeur extrême. La valeur de B répond à des critères semblables à ceux du nombre A qui a été défini ci-dessus : assez grande pour éliminer l'impact de points aberrants, pas trop grande pour ne pas engendrer une constante de temps d'établissement trop grande au départ. B peut être choisi typiquement entre 1 et $2^8$.

Si au contraire le signal courant est inférieur à la valeur stockée, on retranche une faible valeur au contenu du registre, de préférence une valeur $(S_{ij}, maxc - S_{ij}minc)/A$ pour que le contenu du registre se réduise progressivement si le dépassement de sa valeur ne se produit que rarement. La valeur A peut être la même que celle qu'on a indiqué ci-dessus à propos du calcul de valeur moyenne récursive : typiquement entre $2^8$ et $2^{14}$.

Ainsi, l'impact d'un point aberrant ne sera que limité, et ce n'est que si des valeurs fortes se reproduisent assez souvent qu'elles finiront par définir une valeur maximale à stocker. Sinon, la valeur extrême stockée se réduit lentement (constante de temps de quelques minutes si A est égal à $2^{12}$ à $2^{14}$ pour 50 images par seconde).

Le contenu du registre ne représente donc pas véritablement une valeur extrême détectée, mais une sorte de valeur haute récurrente assez souvent atteinte par le pixel et qui, pour les besoins de la correction et de l'élimination du bruit fixe d'image, se révèle tout-à-fait utilisable.

De même un registre de valeur basse contiendrait une sorte de valeur basse récurrente assez souvent atteinte par le pixel.

Comme ces valeurs haute et basse $S_{ij}maxc$ et $S_{ij}minc$ sont obtenues par le même calcul pour tous les pixels, on comprend qu'elles peuvent statistiquement servir de base pour la correction des dispersions des pixels en lieu et place des valeurs extrêmes véritables.

La correction d'un pixel consiste alors à appliquer la formule suivante :

$$S^{*}_{ij,n} = S_{ij,n} + M0 - (S_{ij}minc + S_{ij}maxc)/2$$

<u>Correction multiplicative par l'écart de pentes de luminance</u>

Outre la moyenne de la distribution temporelle, on peut prévoir d'utiliser une deuxième caractéristique statistique de la distribution temporelle des signaux issus d'un pixel. Plus précisément, on peut chercher à faire maintenant une correction multiplicative sur la valeur du signal. Cette correction multiplicative est faite de préférence après correction additive du signal par la valeur moyenne, par application d'un gain $G_{ij}$ au signal corrigé du pixel $P_{ij}$, ou plus exactement à la différence entre le signal corrigé $S^{*}_{ij}$ et la moyenne désirée M0.

Ainsi, si on a établi un signal corrigé $S^{*}_{ij,n}$ à partir du signal courant, à partir de la formule $S^{*}_{ij,n} = S_{ij,n} + M0 - M_{ij}$, on va maintenant établir un signal doublement corrigé $S^{**}_{ij,n}$ tel que

$$(S^{**}_{ij,n} - M0) = G_{ij}.(S^{*}_{ij,n} - M0)$$

La formule qui précède est donnée à titre général. Si les signaux sont codés en positif et en négatif autour d'une valeur moyenne M0 prise par définition égale à zéro, cette opération est une simple multiplication du signal par le gain $G_{ij}$. Si au contraire la moyenne M0 n'est pas une référence nulle, il faut utiliser la formule complète et cette correction multiplicative du signal $S^{*}_{ij}$ comprend bien sûr aussi un terme additif qui est égal à $M0[1-G_{ij}]$.

Le gain $G_{ij}$ à appliquer est calculé à partir de l'observation d'une pente moyenne de variation du signal en fonction de la luminance. Si les pixels ont des pentes de variation différentes, alors il y aura un motif de bruit fixe lié aux particularités des pixels individuels. Il est donc souhaitable de déterminer la pente moyenne, de déterminer son écart par rapport à une pente de référence, et de corriger le signal par application d'un gain correspondant au rapport entre la pente désirée et la pente réelle observée.

La pente désirée et la pente observée peuvent être déterminées principalement de deux manières :

8

- en observant l'écart entre extrêmes $S_{ij}max$ - $S_{ij}min$, ou encore l'écart entre extrêmes corrigés $S_{ij}maxc$ - $S_{ij}minc$, les valeurs $S_{ij}maxc$ et $S_{ij}minc$ étant calculées comme indiqué précédemment dans le paragraphe "Calcul de valeurs extrêmes corrigées"
- ou bien en observant l'écart-type des signaux issus du pixel au cours d'un grand nombre d'images.

Dans ces deux méthodes, si l'écart observé est $E_{ij}$ et l'écart théorique de consigne est E0 (le même pour tous les pixels), le gain à appliquer est $E0/E_{ij}$.

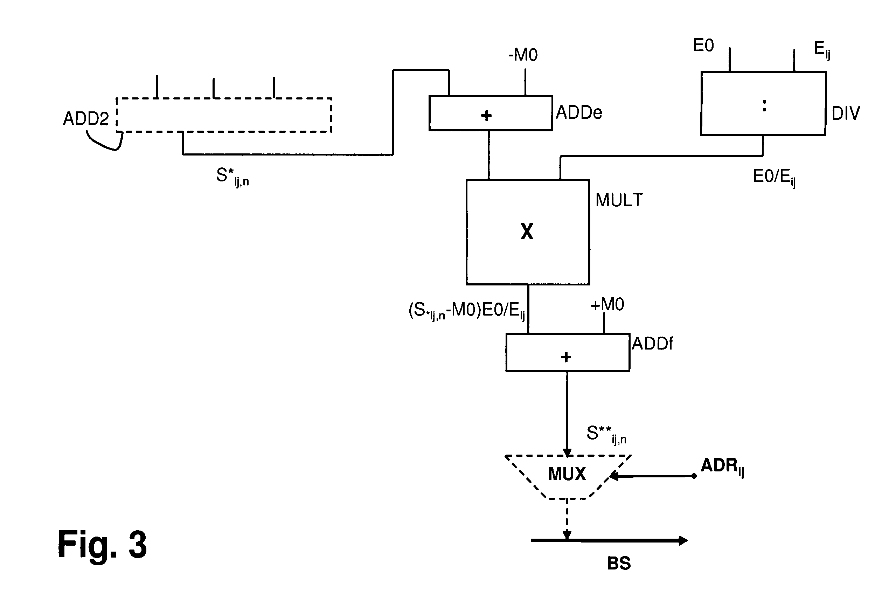

La figure 3 représente le schéma de circuit associé interposé entre l'additionneur ADD2 de la figure 1 (ou 2) et le multiplexeur MUX pour établir le signal $S^{**}_{ij,n}$ à partir d'une correction multiplicative du signal $S^*_{ij,n}$. Un diviseur DIV effectue la division $E0/E_{ij}$. Un multiplieur MULT multiplie le résultat par la quantité $(S^*_{ij,n}-M0)$. Un additionneur ADDe produit cette dernière quantité, et un additionneur ADDf additionne le résultat de la multiplication avec M0 pour produire le signal corrigé $S^{**}_{ij,n}$.

Les paragraphes qui suivent expliquent comment on peut déterminer la valeur $E_{ij}$ dans un circuit électronique associé au pixel en utilisant les deux méthodes.

Calcul de l'écart de pente à partir d'une estimation de l'écart-type

On rappelle que l'écart-type est la racine carrée de la variance $V_{ij}$, et que la variance du signal issu du pixel $P_{ij}$ est la moyenne quadratique des écarts entre la valeur du signal et sa moyenne $M_{ij}$. La variance est également l'écart entre la moyenne quadratique du signal et le carré de la moyenne simple du signal.

On ne pourrait pas facilement calculer la véritable variance ni le véritable écart-type dans un petit circuit associé au pixel. Mais on peut trouver une valeur approchée en procédant d'une manière récursive, analogue à celle qui est faite pour l'estimation de valeur moyenne.

Le calcul récursif de la variance peut être le suivant :

On calcule la moyenne récursive $M_{ij}$ comme indiqué précédemment. On calcule également une moyenne des carrés par le même procédé, dans lequel on remplace la valeur du signal courant $S_{ij,n}$ par le carré de ce signal $(S_{ij,n})^2$

La moyenne des carrés est alors $Q_{ij}$, obtenue par la récurrence

$$Q_{ij.n} = Q_{ij.n-1} + [(S_{ij,n})^2 - Q_{ij.n-1}]/A$$

A peut avoir la même valeur que pour le calcul de la moyenne simple $M_{ij}$.

La variance est alors :

$$V_{ij} = Q_{ij} - (M_{ij})^2 \text{ où } Q_{ij} \text{ est la dernière valeur obtenue pour la moyenne des carrés.}$$

L'écart-type $E_{ij}$ peut être obtenu par approximation successives comme on le fait souvent pour déterminer la racine carrée : $E_{ij}$ est le nombre tel que $V_{ij}^2 = E_{ij}$

Les valeurs $Q_{ij}$ et $M_{ij}^2$ sont des valeurs positives codées sur au moins 24 bits si l'amplitude du signal est codée sur 12 bits utiles, mais elles doivent être élaborés à partir de registres ayant un nombre de bits supérieur du fait de la méthode récursive utilisant un nombre A, faute de quoi la méthode récursive ne pourrait pas fonctionner.

La mise en oeuvre de ces calculs se fait par un circuit comprenant non seulement des possibilités d'addition et soustraction et division par une puissance de deux, comme aux figures 1 et 2, mais aussi des multiplications (élévations au carré).

On notera qu'il peut être souhaitable de prévoir que l'écart-type est limité à une valeur plancher vers le bas (c'est-à-dire qu'il ne peut pas descendre au-dessous d'une certaine valeur). Sans cela le gain à appliquer risquerait d'être trop élevé dans des cas de pixels ayant une pente de variation de signal particulièrement faible en fonction de la luminance.

Le signal doublement corrigé, additivement et multiplicativement, est alors :

$$S^{**}_{ij,n} = (E0/E_{ij}).S^*_{ij,n} + [1-(E0/E_{ij})].M0$$

donc

$$S^{**}_{ij,n} = (E0/E_{ij})[\ S_{ij,n} + M0 - M_{ij}] + [1-(E0/E_{ij})].M0$$

Ou encore :

$$S^{**}_{ij,n} = (E0/E_{ij}).\ S_{ij,n} - (E0/E_{ij}).M_{ij} +\ M0$$

On comprend qu'on pourrait bien sûr intervertir les opérations de correction multiplicative et de correction additive, en multipliant directement le signal $S_{ij,n}$ issu du pixel par le gain $E0/E_{ij}$, la correction additive unique étant alors égale à M0 - $(E0/E_{ij}).M_{ij}$

Le circuit associé au pixel comprend alors les éléments nécessaires pour effectuer non seulement des additions et soustractions mais aussi des multiplications et divisions.

Calcul de l'écart de pente à partir d'une estimation de l'écart entre extrêmes

En particulier (mais pas seulement) dans le cas où la moyenne approchée a été obtenue à partir d'une détermination de l'écart entre extrêmes, pour établir une correction additive compensant les écarts de moyennes, on peut envisager d'utiliser la connaissance de cet écart pour faire une correction multiplicative. En effet, cet écart est représentatif aussi d'une pente de variation en fonction de la luminance : si l'écart varie entre deux pixels, alors que tous les pixels devraient statistiquement voir les mêmes luminances extrêmes au bout d'un certain nombre d'images, c'est que leurs pentes de variation en fonction de la luminance ne sont pas les mêmes.

La formule de calcul de correction additive et multiplicative à appliquer est la même que dans le paragraphe précédent :

$$S^{**}_{ij,n} = (E0/E_{ij}).\ S_{ij,n} - (E0/E_{ij}).M_{ij} +\ M0$$

en remplaçant l'écart-type $E_{ij}$ par l'écart $S_{ij}max$ - $S_{ij}min$ entre extrêmes, ou encore par l'écart entre extrêmes corrigés $S_{ij}maxc$ - $S_{ij}minc$, les valeurs $S_{ij}maxc$ et $S_{ij}minc$ étant calculées comme indiqué précédemment dans le paragraphe "Calcul de valeurs extrêmes corrigées".

L'écart-type de référence E0 doit bien sûr aussi être remplacé par un écart entre extrêmes de référence.

Là encore, il peut être souhaitable de donner une valeur plancher à l'écart entre valeurs extrêmes (corrigées ou non corrigées). En d'autres mots, si l'écart constaté (corrigé ou non corrigé) est trop faible, on le remplace par la valeur plancher pour faire le calcul de gain. Cela évite d'appliquer un trop grand gain pour des pixels qui ont une trop faible pente de variation de signal en fonction de la luminance.

Correction multiplicative à partir de la valeur médiane entre extrêmes

Dans la correction mixte additive et multiplicative aboutissant à un signal corrigé $S^{**}_{ij,n} = (E0/E_{ij}).\ S_{ij,n}$ - $(E0/E_{ij}).M_{ij}$ + M0, on a considéré que la moyenne $M_{ij}$ était la moyenne obtenue par calcul récursif direct avec un schéma tel que celui des figures 1 et 2. Mais on peut la remplacer par la valeur médiane entre extrêmes comme on l'a fait pour une correction additive simple : voir précédemment le paragraphe "Correction additive par une valeur médiane entre extrêmes". Et bien sûr on peut utiliser aussi les valeurs extrêmes corrigées plutôt que les véritables valeurs extrêmes.

Mise en oeuvre de la correction au niveau du pixel

Les schémas des figures 1 et 2 supposent que le signal $S_{ij}$ à corriger arrive dans un registre d'entrée R0 sous forme numérique, en vue d'une correction numérique. Ce signal numérique peut provenir d'une conversion analogique-numérique, dans le pixel ou dans le circuit de correction associé au pixel, d'un courant ou d'une tension analogique issues du photodétecteur.

Des architectures de circuits hybrides peuvent permettre de le faire par exemple avec un pixel photosensible sur une puce en regard d'un circuit électronique de traitement sur une autre puce. Les puces sont rapportées l'une contre l'autre et des connexions électriques directes sont établies entre un pixel et son circuit de calcul associé. On pourrait envisager aussi que la conversion analogique-numérique aussi bien que le calcul de correction soient effectués dans le pixel lui-même, si la technologie le permet, à la condition de disposer de suffisamment de place pour loger les circuits électroniques de calcul de correction dans l'espace disponible attribué à chaque pixel.

Le signal numérique issu du pixel peut aussi être obtenu par comptage numérique direct de quantités de charges ou d'impulsions : on sait par exemple faire un élément de photodétection qui fournit un courant de charges, lequel est converti en impulsions dont la fréquence est proportionnelle à l'éclairement. Un compteur, dans le pixel, compte les impulsions pendant la durée d'exposition, de sorte que le contenu du compteur représente, directement sous forme numérique, la dose d'éclairement reçue pendant la durée d'exposition. C'est ce contenu qui constitue alors le signal $S_{ij}$ issu du pixel, à corriger par le circuit de correction associé. Le registre R0 des figures 1 et 2 peut être alors tout simplement ce compteur.

On peut même prévoir que le registre R0 et l'additionneur ADD2 de la figure 2 sont remplacés par un seul compteur qui compte la dose d'éclairement : le contenu du compteur serait alors chargé en début de mesure par la valeur $Z_{ij}$ puis il serait incrémenté par les impulsions de comptage d'éclairement proportionnelles au courant du photodétecteur jusqu'à la fin de la durée d'exposition. A la fin, le contenu du compteur aura réalisé l'addition désirée.

$$S^*_{ij,n} = S_{ij,n} + Z_{ij}$$

## Revendications

1. Procédé de traitement de signaux issus des pixels d'un capteur d'image matriciel, ce procédé comprenant les étapes suivantes :

   - on recueille le signal ($S_{ij,n}$) issu de chaque pixel ($P_{ij}$) au cours d'un grand nombre d'images successives ;
   - on détermine pour chaque pixel, dans un circuit électronique élémentaire associé au pixel, par une méthode numérique récursive, une valeur approchée ($M_{ij}$) d'une moyenne du signal issu du pixel au cours de ce grand nombre d'images ;
   - on corrige instantanément le signal issu de chaque pixel en fonction de la valeur moyenne approchée déterminée et en fonction d'une valeur moyenne de référence (M0) commune à tous les pixels,
   - on transmet hors du circuit associé au pixel un signal corrigé.

2. Procédé de traitement selon la revendication 1, **caractérisé en ce qu'**une valeur de moyenne approchée ($M_{ij,n}$) est obtenue en additionnant à une moyenne précédemment obtenue ($M_{ij,n-1}$) une fraction de l'écart entre la valeur du signal courant ($S_{ij,n}$) correspondant à une image et la moyenne ($M_{ij,n-1}$) précédemment obtenue à partir des images précédentes.

3. Procédé de traitement selon l'une des revendications 1 et 2, **caractérisé en ce que** le signal corrigé est obtenu en additionnant au signal courant ($S_{ij,n}$) la différence entre la moyenne de consigne et la moyenne calculée ($M_{ij,n}$).

4. Procédé de traitement selon la revendication 1, **caractérisé en ce qu'**on calcule de manière récursive une estimation ($Z_{ij}$) d'écart de moyenne et on ajoute cette estimation au signal courant ($S_{ij,n}$) pour obtenir un signal corrigé ($S^*_{ij,n}$), le calcul récursif de l'estimation étant effectué en additionnant à une estimation précédemment calculée ($Z_{ij,n-1}$) une fraction de la différence entre la valeur moyenne de référence (M0) et le signal corrigé ($S^*_{ij,n}$).

5. Procédé de traitement selon la revendication 1, **caractérisé en ce que** la valeur moyenne approchée et calculée de manière récursive est une valeur centrale entre des valeurs limites hautes et basses prises par le signal issu du pixel au cours du grand nombre d'images, et la correction du signal issu du pixel est une correction additive comprenant l'addition à ce signal de la différence entre la valeur moyenne ainsi calculée et la valeur de référence (M0).

6. Procédé de traitement selon la revendication 5, **caractérisé en ce que** la valeur limite haute est obtenue de manière récursive par l'algorithme suivant :

   - si la valeur du signal ($S_{ij,n}$) du pixel pour l'image courant est supérieure à la valeur limite haute ($S_{ij}maxc$), on modifie la valeur limite haute pour lui ajouter une fraction de la différence entre la valeur du signal et la valeur limite ;
   - si la valeur du signal ($S_{ij,n}$) du pixel est inférieure à la valeur limite, on retranche à cette valeur une fraction de la différence entre les valeur limites haute et basse.

**7.** Procédé selon l'une des revendications 5 et 6, **caractérisé en ce que** l'on modifie le signal corrigé en lui appliquant une correction multiplicative comportant un coefficient multiplicateur qui modifie la pente de variation du signal en fonction de la luminance, le coefficient multiplicateur étant le rapport entre un écart de référence (E0) et l'écart constaté entre les valeurs limites haute et basse.

**8.** Capteur d'image matriciel, comprenant, pour chaque pixel, un circuit numérique élémentaire associé au pixel, ce circuit élémentaire comportant des moyens pour calculer de manière récursive une valeur approchée ($M_{ij,n}$) d'une moyenne du signal issu du pixel au cours d'un grand nombre d'images précédentes, des moyens pour corriger le signal issu du pixel en fonction de la valeur moyenne approchée déterminée et en fonction d'une valeur moyenne de référence commune à tous les pixels, et des moyens pour transmettre hors du circuit associé au pixel un signal corrigé.

**9.** Capteur d'image matriciel selon la revendication 8, **caractérisé en ce que** le circuit élémentaire associé et un photodétecteur élémentaire fournissant le signal à corriger sont placés dans une même zone au sein d'une matrice de pixels.

**10.** Capteur d'image matriciel selon la revendication 8, **caractérisé en ce que** le circuit élémentaire associé est placé dans une matrice de circuits associés séparée d'une matrice de photodétecteurs élémentaires fournissant le signal à corriger, les signaux à corriger issus des pixels de la matrice étant envoyés individuellement à chaque circuit associé respectif.

## Claims

**1.** A method of processing signals obtained from pixels of a matrix image sensor, this method comprising the following steps:

- the signal($S_{ij,n}$) obtained from each pixel ($P_{ij}$) is collected during a large number of successive images;
- for each pixel, in an individual electronic circuit associated with the pixel, a recursive digital method is used to determine an approximate value ($M_{ij}$) of an average of the signal obtained from the pixel during this large number of images;
- the signal obtained from each pixel is instantaneously corrected according to the determined approximate average value and according to a reference average value (M0) common to all the pixels,
- a corrected signal is transmitted from the circuit associated with the pixel.

**2.** The processing method as claimed in claim 1, **characterized in that** an approximate average value ($M_{ij,n}$) is obtained by adding to a previously obtained average ($M_{ij,n-1}$) a fraction of the deviation between the value of the current signal ($S_{ij,n}$) corresponding to an image and the average ($M_{ij,n-1}$) previously obtained from the preceding images.

**3.** The processing method as claimed in one of claims 1 or 2, **characterized in that** the corrected signal is obtained by adding to the current signal ($S_{ij,n}$) the difference between the set point average and the calculated average ($M_{ij,n}$).

**4.** The processing method as claimed in claim 1, **characterized in that** an estimation ($Z_{ij}$) of the average deviation is calculated recursively and this estimation is added to the current signal ($S_{ij,n}$) to obtain a corrected signal ($S^{*}_{ij,n}$), the recursive calculation of the estimation being performed by adding to a previously calculated estimation ($Z_{ij,n-1}$) a fraction of the difference between the reference average value (M0) and the corrected signal ($S^{*}_{ij,n}$).

**5.** The processing method as claimed in claim 1, **characterized in that** the approximate average value calculated recursively is a median between high and low limit values taken by the signal obtained from the pixel during the large number of images, and the correction of the signal obtained from the pixel is an additive correction comprising the addition to this signal of the difference between the average value calculated in this way and the reference value (M0).

**6.** The processing method as claimed in claim 5, **characterized in that** the high limit value is obtained recursively by the following algorithm:

- if the value of the signal ($S_{ij,n}$) from the pixel for the current image is greater than the high limit value ($S_{ij}$maxc), the high limit value is modified to add to it a fraction of the difference between the value of the signal and the limit value;
- if the value of the signal ($S_{ij,n}$) from the pixel is less than the limit value, a fraction of the difference between the high and low limit values is subtracted from this value.

**7.** The method as claimed in one of claims 5 to 6, **characterized in that** the corrected signal is modified by applying to it a multiplicative correction comprising a multiplying coefficient which modifies the slope of variation of the signal according to the luminance, the multiplying coefficient being the ratio between a reference deviation (E0) and the deviation observed between the high and low limit values.

**8.** A matrix image sensor, comprising, for each pixel, an individual digital circuit associated with the pixel, this individual circuit comprising means for recursively calculating an approximate value ($M_{ij,n}$) of an average of the signal obtained from the pixel during a large number of preceding images, means for correcting the signal obtained from the pixel according to the determined approximate average value and according to a reference average value common to all the pixels, and means for transmitting a corrected signal from the circuit associated with the pixel.

**9.** The matrix image sensor as claimed in claim 8, **characterized in that** the associated individual circuit and an individual photodetector supplying the signal to be corrected are placed in one and the same area within a matrix of pixels.

**10.** The matrix image sensor as claimed in claim 8, **characterized in that** the associated individual circuit is placed in a matrix of associated circuits separate from a matrix of individual photodetectors supplying the signal to be corrected, the signals to be corrected obtained from the pixels of the matrix being sent individually to each respective associated circuit.

**Patentansprüche**

**1.** Verfahren zum Verarbeiten von von Pixeln eines Matrixbildsensors kommenden Signalen, wobei das Verfahren die folgenden Schritte beinhaltet:

- Sammeln der Signale ($S_{ij,n}$) von jedem Pixel ($P_{ij}$) im Laufe einer großen Zahl von aufeinander folgenden Bildern;
- Ermitteln, für jedes Pixel, eines Näherungswertes ($M_{ij}$) eines Mittelwertes des von dem Pixel kommenden Signals im Laufe dieser großen Zahl von Bildern in einer mit dem Pixel assoziierten elektronischen Grundschaltung mit einem digitalen Rekursivverfahren;
- augenblickliches Korrigieren des von jedem Pixel kommenden Signals in Abhängigkeit von dem ermittelten näherungsweisen Mittelwert und in Abhängigkeit von einem Referenzmittelwert (M0), der allen Pixeln gemeinsam ist,
- Senden eines korrigierten Signals außerhalb der mit dem Pixel assoziierten Schaltung.

**2.** Verfahren zum Verarbeiten nach Anspruch 1, **dadurch gekennzeichnet, dass** ein näherungsweiser Mittelwert ($M_{ij,n}$) durch Addieren eines Bruchteils der Abweichung zwischen dem Wert des laufenden Signals ($S_{ij,n}$) entsprechend einem Bild und dem zuvor von vorherigen Bildern erhaltenen Mittelwert ($M_{ij,n-1}$) zu einem zuvor erhaltenen Mittelwert ($M_{ij,n-1}$) erhalten wird.

**3.** Verfahren zum Verarbeiten nach einem der Ansprüche 1 und 2, **dadurch gekennzeichnet, dass** das korrigierte Signal durch Addieren der Differenz zwischen dem eingestellten Mittelwert und dem berechneten Mittelwert ($M_{ij,n}$) zu dem laufenden Signal ($S_{ij,n}$) erhalten wird.

**4.** Verfahren zum Verarbeiten nach Anspruch 1, **dadurch gekennzeichnet, dass** ein Schätzwert ($Z_{ij}$) der Abweichung des Mittelwerts auf rekursive Weise berechnet und dieser Schätzwert zum laufenden Signal ($S_{ij,n}$) addiert wird, um ein korrigiertes Signal ($S^{*}_{ij,n}$) zu erhalten, wobei die rekursive Berechnung des Schätzwertes durch Addieren eines Bruchteils der Differenz zwischen dem Referenzmittelwert (M0) und dem korrigierten Signal ($S^{*}_{ij,n}$) zu einem zuvor berechneten Schätzwert ($Z_{ij,n-1}$) erfolgt.

**5.** Verfahren zum Verarbeiten nach Anspruch 1, **dadurch gekennzeichnet, dass** der auf rekursive Weise berechnete näherungsweise Mittelwert ein Wert in der Mitte zwischen dem oberen und dem unteren Grenzwert ist, die von dem im Laufe der großen Zahl von Bilden von dem Pixel kommenden Signal genommen wurden, und die Korrektur des von dem Pixel kommenden Signals eine additive Korrektur ist, die die Addition der Differenz zwischen dem so berechneten Mittelwert und dem Referenzwert (M0) zu diesem Signal beinhaltet.

6. Verfahren zum Verarbeiten nach Anspruch 5, **dadurch gekennzeichnet, dass** der obere Grenzwert auf rekursive Weise mittels des folgenden Algorithmus erhalten wird:

- Modifizieren, wenn der Wert des Signals ($S_{ij,n}$) des Pixels für das laufende Bild größer als der obere Grenzwert ($S_{ij}$maxc) ist, des oberen Grenzwertes durch Addieren eines Bruchteils der Differenz zwischen dem Wert des Signals und dem Grenzwert;
- Vermindern, wenn der Wert des Signals ($S_{ij,n}$) des Pixels kleiner als der Grenzwert ist, des Grenzwertes um einen Bruchteil der Differenz zwischen dem oberen und dem unteren Grenzwert.

7. Verfahren zum Verarbeiten nach einem der Ansprüche 5 und 6, **dadurch gekennzeichnet, dass** das korrigierte Signal durch Anwenden einer multiplikativen Korrektur modifiziert wird, die einen Multiplikationskoeffizienten beinhaltet, der das Variationsgefälle des Signals in Abhängigkeit von der Luminanz modifiziert, wobei der Multiplikationskoeffizient das Verhältnis zwischen einer Referenzabweichung (E0) und der festgestellten Abweichung zwischen dem oberen und dem unteren Grenzwert ist.

8. Matrixbildsensor, der für jedes Pixel eine mit dem Pixel assoziierte digitale Grundschaltung umfasst, wobei diese Grundschaltung Folgendes umfasst: Mittel zum rekursiven Berechnen eines Näherungswertes ($M_{ij,n}$) eines Mittelwertes des im Laufe einer großen Zahl von vorhergehenden Bildern von dem Pixel kommenden Signals, Mittel zum Korrigieren des von dem Pixel kommenden Signals in Abhängigkeit von dem ermittelten näherungsweisen Mittelwert und in Abhängigkeit von einem Referenzmittelwert, der allen Pixeln gemeinsam ist, und Mittel zum Senden eines korrigierten Signals außerhalb der mit dem Pixel assoziierten Schaltung.

9. Matrixbildsensor nach Anspruch 8, **dadurch gekennzeichnet, dass** die assoziierte Grundschaltung und ein das zu korrigierende Signal liefernder Grundphotodetektor sich in derselben Region im Innern einer Pixelmatrix befinden.

10. Matrixbildsensor nach Anspruch 8, **dadurch gekennzeichnet, dass** die assoziierte Grundschaltung sich in einer Matrix von assoziierten Schaltungen befindet, die von einer Matrix von das zu korrigierende Signal liefernden Grundphotodetektoren getrennt ist, wobei die von den Pixeln der Matrix kommenden zu korrigierenden Signale individuell zu jeder jeweiligen assoziierten Schaltung gesendet werden.

Fig. 1

R0

$S_{ij,n}$

$M_{ij,n-1}/2^p$

$-M_{ij,n-1}/2^p$

R1

$1/2^p$

$S_{ij,n}/2^p$

ADD1

$M_{ij,n-1}$

R2

$1/2^p$

$$M_{ij,n} = M_{ij,n-1} + S_{ij,n}/2^p - M_{ij,n-1}/2^p$$

$M_{ij,n-1}$

$M_{ij,n}$

RM

$M_{ij}$

ACT

M0

$-M_{ij}$

$S_{ij,n}$

ADD2

$$S^*_{ij,n} = S_{ij,n} + M0 - M_{ij}$$

$S^*_{ij,n}$

MUX

$ADR_{ij}$

BS

**Fig. 2**

EP 2 132 703 B1

Fig. 3

## RÉFÉRENCES CITÉES DANS LA DESCRIPTION

**Documents brevets cités dans la description**

- US 2007047834 A